# EUROPEAN PATENT SPECIFICATION

(11) **EP 2 811 549 B1**
(45) Date of publication and mention of the grant of the patent: **19.09.2018**
(21) Application number: 13171053.5
(22) Date of filing: 07.06.2013
(51) Int. Cl.: H01M 2/34, H01M 10/48, H02J 7/00, B60L 3/00, H01H 39/00, G01R 31/02, B60L 3/04

(54) **Over-current responsive device**
Auf Überstrom reagierende Vorrichtung
Dispositif sensible à la surintensité

(43) Date of publication of application: 10.12.2014
(73) Proprietor: Autoliv Development AB, 447 83 Vårgårda (SE)
(72) Inventor: Holgers, Alf, 441 91 Alingsås (SE); Sturk, David, 413 20 Göteborg (SE); Cavell, Christian, 82152 Planegg (DE); Berner, Magnus, 462 41 Vänersborg (SE); Hoffman, Lars, 464 63 Brålanda (SE)
(74) Representative: Kransell & Wennborg KB

(56) References cited:
- DE-A1-102010 053 942
- US-A1- 2007 138 998
- US-A1- 2012 022 738
- US-A1- 2013 126 326
- US-B1- 6 344 788

## Description

### TECHNICAL FIELD

The invention relates to a method and an arrangement for performing at least one of disconnecting and bypassing electric equipment.

### BACKGROUND

Electric components in a motor vehicle, such as an automotive battery for use in the motor vehicle, may cause great damages to the motor vehicle in which the electric components are situated in case of component failure. This is particularly evident in the case of a vehicle crash or accident where severe vehicle damages and even passenger injuries may arise due to high magnitude short-cut currents causing vehicle fire. Further damaging battery failure situations include e.g. short-cut currents, forming of gas in Lithium-ion batteries and damaged mechanical and/or electronic components which in its turn could cause vehicle breakdown and ultimately a vehicle crash.

German patent application DE 10 2010 053942 discloses a circuit having a battery comprising a battery module with cells that are arranged in series and/or parallel to each other. A sensor detects malfunction of the cells, and a protective switch is activated based on the sensor data. A control device is designed and programmed to reversibly apply a protective switch signal to the protective switch for activating the switch. The protective switch is designed as an emergency circuit breaker with transistors, where the sensor data is stored in a non-volatile memory device.

US patent no. 6,344,788 discloses electrical contactors used in electric motors comprising batteries, in particular an electrical contactor for a battery, consisting of a hollow body defining an upstream part in which a pyrotechnic initiation device is located and a downstream part in which a piston is housed. The downstream part has three conducting studs making it possible, when the piston moves due to the effect of the combustion gases, to pass instantaneously from a position corresponding to the electrical connection of the first two studs to a position corresponding to the electrical connection of the second stud to the third stud.

US patent application US 2007/138998 discloses a controller and method for controlling output of a rechargeable battery that prevents the life span of the rechargeable battery from being shortened while ensuring starting of engine. The rechargeable battery controller is mounted on a vehicle including an engine functioning as a power source. The controller includes a control unit for instructing a vehicle electronic control unit (ECU), which is installed in the vehicle, to stop discharging the rechargeable battery when an index indicating the charged state of the rechargeable battery satisfies a discharge suspension condition. The control unit includes a monitor unit for changing the discharge suspension condition so as to continue discharging the rechargeable battery continues when the rechargeable battery is expected to supply power to the starter motor of the engine.

US patent application US 2012/022738 discloses an electric powered vehicle including a motor, an inverter, a main power storage device, and a plurality of sub power storage devices. A converter is connected to a selected one of the plurality of sub power storage devices to perform voltage conversion bidirectionally between the selected sub power storage device and an electric power feeding line. A control device executes a disconnection process to disconnect a selected sub power storage device from the converter based on a state of charge of the selected sub power storage device when there is no new sub power storage device that can replace the selected sub power storage device. Further, the control device executes a braking process for the inverter for regenerative braking by the motor. The control device prohibits, during execution of one process of a disconnection process and braking process, the other process.

International patent application WO 2009/106394 discloses a battery pack for use in a motor vehicle having a plurality of battery modules which individually can be disconnected and/or bridged in the event of a fault in one or more of the battery modules, in order to make it possible to preclude a destructive chain reaction within a battery pack. For detecting a fault in one or more of the battery modules, an evaluation unit in the form of a vehicle on-board computer or a battery management system is employed and determines whether disconnection and/or bridging should be undertaken in response to measurement signals derived from a temperature sensor, a voltage sensor or a sensor of chemical properties. Using this type of evaluation unit for determining whether one or more battery modules should be disconnected or bridged is complex and expensive.

### SUMMARY

An objective of the present invention is to solve, or at least mitigate, this problem in the art and to provide an improved arrangement for disconnecting and/or bypassing electric equipment from a conductive path.

This objective is attained in a first aspect of the invention by an arrangement for performing at least one of disconnecting and bypassing electric equipment responsive to a measurement of an electric property, as set out in independent claim 1.

Thus, the device arranged to measure an electric property of the conductive path, being e.g. a coil measuring a current, transmits a control signal responsive to whether a value of the measured signal fulfils a predetermined threshold criteria to the switching element being either a bypass switch, a disconnect switch, or both. If the predetermined threshold criteria is fulfilled, for instance if magnitude of a measured current is considered high, the bypass switch and/or the disconnect switch will bypass and/or disconnect the electric equipment from the conductive path.

Advantageously, by having the measuring device measure the electric property, as well as bypassing and/ or disconnecting the electric equipment, an autonomous approach is provided. Further, in contrast to prior art, a central processing unit in the form of e.g. an electronic control unit (ECU) is strictly not required in the arrangement of the present invention, at least not for determining whether the battery modules should be bypassed and/ or disconnected. By using passive components (and not having to included a component such as a microprocessor), the arrangement for disconnecting one or more battery modules becomes inexpensive and less complex. Moreover, the arrangement will be easier to implement inside the automotive battery with passive components.

In embodiments of the present invention, the device for measuring an electric property of the conductive path is a coil detecting an electric property in the form of current. In an alternative embodiment, the measuring device is a current shunt which indirectly measures the electric current by measuring a voltage drop created by the electric current across the shunt. In a further alternative embodiment, a probe device is used for measuring an electromagnetic field and determining the current from the measured electromagnetic field. Further alternatives can be envisaged. For instance, it is possible to detect a noise level of a current and thus determine a characteristic of the current, i.e. magnitude and/ or frequency of the current. Further alternatives for sensing the current in the conductive path are Hall elements or piezoelectric sensors.

In a further embodiment of the present invention, the at least one switching element is complemented with a further control input arranged to receive a switching signal from at least one further device for performing the switching (i.e. bypass and/ or disconnection) of the electrical equipment. In an embodiment of the present invention, the further device is a temperature sensor. Thus, even if the current in the conductive path does not exceed a predetermined threshold value, it will still be possible to disconnect the battery module if the temperature is rising, thus indicating a possibly catastrophic failure in the vehicle.

In still a further embodiment of the present invention, the further device is embodied in the form of an ECU, which typically is implemented by one or more microprocessors executing appropriate software for controlling various systems and components in the vehicle. A vehicle may contain a great number of interconnected ECUs for controlling all properties of the vehicle such as a brake control module (BCM) or a speed control module (SCM). The vehicle could even comprise a particular crash ECU receiving information from a battery monitoring unit (BMU), which detects various physical properties of the battery such as voltage, current, temperature, state of charge (SOC) etc., for management of the battery.

In another embodiment of the present invention, the bypass switch and/ or the disconnect switch are implemented by means of pyrotechnical switches. If both bypassing and disconnection functionality is desired, the two types of switches maybe arranged in the same housing using a common pyrotechnical charge. The pyrotechnical switch(es) thus comprises a pyrotechnical charge, which when ignited by the control signal activates a piston-like movable bridging element closing a first conductor coupled to a bypass path. Simultaneously, upon ignition of the pyrotechnical charge, a piston-like movable breaking element opens a second conductor. The breaking element is hence isolating and disconnects the battery module from the conductive path. An advantage of using a pyro switch as compared to for instance fuses is that switching time is independent of the passing current, which implies instant switching.

In a further embodiment, the arrangement of the present invention is implemented in an automotive battery for bypassing and/or disconnecting one or more battery modules included in the battery. Thus, each battery module in the automotive battery can be individually bypassed and/ or disconnected by the measuring device by transmitting the control signal to the bypass switch and the disconnect switch that are arranged at each battery module. During operation of the automotive battery arranged in an electric or hybrid motor vehicle, each battery module delivers power to an inductive load in the form of an electric motor. In case it is detected by the measuring device that one or more battery modules should be disconnected, e.g. due to a short-cut current the bypass switch(es) arranged at the module(s) to be disconnected are controlled to close a bypass path via which the detected module is bypassed, and the disconnect switch(es) arranged at the module(s) to be disconnected are controlled to disconnect the concerned module(s) from the remaining battery modules in the automotive battery.

In this particular embodiment it may further be advantageous to arrange the switching element with a further input for receiving switching signals; it may be desirable to bypass and/ or disconnect one or more battery modules for prophylactic reasons, for instance if the ECU receive an indication that there is a risk that a fault for some reason is to occur, even if the indicated fault subsequently does not occur. Moreover, if one or more battery modules are disconnected, electric imbalance may arise in the battery, leading to a need for disconnection of further (functioning) battery modules to attain electric balance.

If required, all battery modules can be instantly bypassed and disconnected, or the modules can be bypassed and disconnected one by one in a sequence, in case of a situation as e.g. a severe car accident in order to prevent the battery or surrounding equipment from catching fire.

It is noted that the invention relates to all possible combinations of features recited in the claims. Further features of, and advantages with, the present invention will become apparent when studying the appended claims and the following description. Those skilled in the art realize that different features of the present invention can be combined to create embodiments other than those described in the following.

### BRIEF DESCRIPTION OF THE DRAWINGS

The invention is now described, by way of example, with reference to the accompanying drawings, in which:
Figures 1a and b illustrate a respective embodiment of an arrangement according to the present invention;
Figures 2a and b illustrate a further respective embodiment of an arrangement according to the present invention;
Figure 3 illustrates yet a further embodiment of an arrangement according to the present invention;
Figure 4 shows a pyrotechnical switch to be used in an embodiment of an arrangement according to the present invention; and
Figure 5 shows an automotive battery comprising the arrangement according to the present invention.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

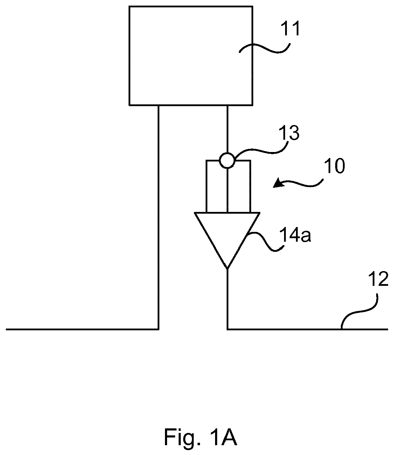

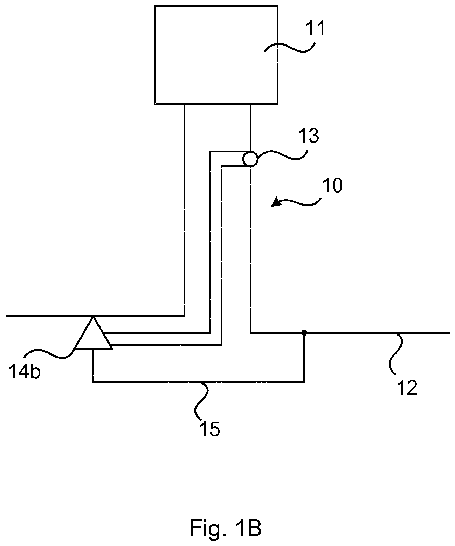

Figures 1a and b each illustrate an embodiment of an arrangement for bypassing and disconnecting electric equipment, respectively, from a conductive path according to the present invention. In the following, the electric equipment will be exemplified in the form of a battery module comprised in an automotive battery, which battery module is to be bypassed and/or disconnected from a main power delivery line of the automotive battery. However, the present invention is applicable to any electric equipment.

In the case of e.g. an automotive battery, it maybe desirable to individually bypass and disconnect each battery module. During operation of the automotive battery arranged in an electric or hybrid motor vehicle, each battery module delivers power to an inductive load in the form of an electric motor. If a vehicle failure occurs, the bypassing and/or disconnection maybe necessary to avoid catastrophic failure such as fire.

In a practical example, an automotive battery delivers 300 V to the electric motor by serially connecting five battery modules each delivering 60 V. In normal operation, the voltage provided by the battery will be induced in the inductive element and cause a current to flow. If one or more battery modules for some reason become defective or if failures appear in other components of the vehicle, it may be necessary to bypass or disconnect one or more of the battery modules to prevent further damage.

Figure 1a shows an arrangement 10 for detecting an electric property of a conductive path 12 to which electric equipment 11 in the form of an automotive battery module is connected. In this particular embodiment, the battery module 11 is to be disconnected from the conductive path 12 being a main power delivery line of the automotive battery. The arrangement 10 comprises a device 13 arranged to measure the electric property of the conductive path and to transmit a control signal responsive to whether a value of the measured signal fulfils a predetermined threshold criteria. In this exemplifying embodiment, the device 13 is a coil for measuring an electric property in the form of a current of the conductive path 12, meaning that the magnitude of the control signal is relative to the strength of the measured current. The arrangement 10 further comprises a switching element 14a coupled to the conductive path 12 and arranged to receive the control signal to disconnect the battery module 11 from the conductive path 12. Thus, the coil 13 should be dimensioned such that if an overcurrent of a certain magnitude flows in the path 12 (i.e. the current exceeds a predetermined threshold level), the coil sends a control signal of a sufficient magnitude to the switching element 14a, which disconnects the battery module 11 from the main power delivery line 12.

Figure 1b shows an arrangement 10 for detecting an electric property of a conductive path 12 to which electric equipment 11 in the form of an automotive battery module is connected. In this particular embodiment, the battery module 11 is to be bypassed from the conductive path 12 being a main power delivery line of the automotive battery. The arrangement 10 comprises a device 13 arranged to measure the electric property of the conductive path and to transmit a control signal responsive to whether a value of the measured signal fulfils a predetermined threshold criteria. In this exemplifying embodiment, as in Figure 1a, the device 13 is a coil for measuring an electric property in the form of a current of the conductive path 12. The arrangement 10 further comprises a switching element 14b coupled to the conductive path 12 and arranged to receive the control signal to close a bypass path 15 in order to bypass the battery module 11 from the main power line 12. Thus, the coil 13 should be dimensioned such that if an overcurrent of a certain magnitude flows in the path 12 (i.e. the current exceeds a predetermined threshold level), the coil sends a control signal of a sufficient magnitude to the switching element 14b, which closes the bypass path 15 and bypasses the battery module 11 from the main power delivery line 12.

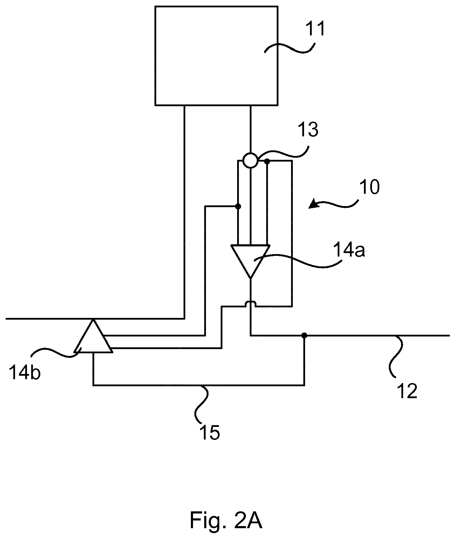

Figure 2a shows an arrangement 10 for detecting an electric property of a conductive path 12 to which electric equipment 11 in the form of an automotive battery module is connected. In this particular embodiment, the battery module 11 is to be bypassed as well as disconnected from the conductive path 12 being a main power delivery line of the automotive battery. The arrangement 10 comprises a device 13 arranged to measure the electric property of the conductive path and to transmit a control signal responsive to whether a value of the measured signal fulfils a predetermined threshold criteria. In this exemplifying embodiment, as in Figures 1a and 1b, the device 13 is a coil for measuring an electric property in the form of a current of the conductive path 12. The arrangement 10 further comprises a first switching element 14a (i.e. a bypass switch) and a second switching element 14b (i.e. a disconnect switch) coupled to the conductive path 12 and respectively arranged to receive the control signal to close a bypass path 15 in order to bypass the battery module 11 from the main power line 12, and to receive the control signal to disconnect the battery module 11 from the conductive path 12. Thus, the coil 13 detects a current and sends a control signal, the magnitude of which is relative to the strength of the measured, to each of the first and second switching elements 14a, 14b, which closes the bypass path 15 to bypass the battery module 11 from the main power delivery line 12, and disconnects the battery module from the power line 12, respectively.

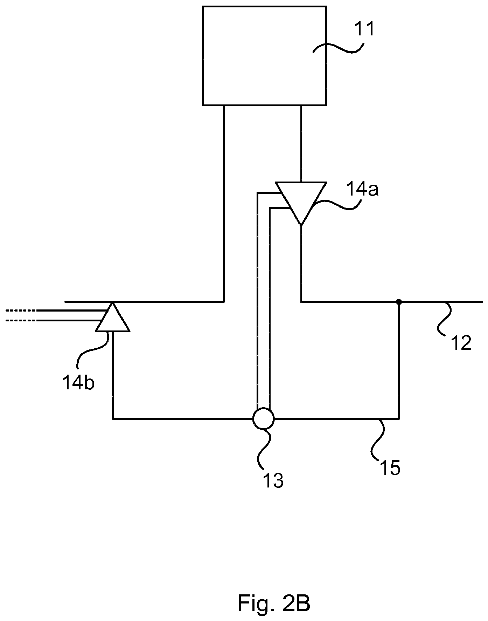

In the embodiments of the present invention illustrated with reference to Figures 1a-b and Figure 2a, the device 13 for measuring an electric property of the conductive path 12 is arranged at a terminal of the electric equipment 11 to be bypassed and/ or disconnected. In an alternative embodiment shown in Figure 2b, the device 13 could be placed in the bypass path 15 (on condition that bypassing is to be performed). In yet an alternative, the device 13 could be placed in the conductive path 12. In still another alternative, a first measuring device 13 is placed in the bypass path 15 while a second measuring device 13 is placed at the terminal of the electric equipment 11 for redundancy purposes

Figure 2b thus shows an arrangement 10 for detecting an electric property of a conductive path 12 to which electric equipment 11 in the form of an automotive battery module is connected. In this particular embodiment, the battery module 11 is to be bypassed as well as disconnected from the conductive path 12 being a main power delivery line of the automotive battery. The arrangement 10 comprises a bypass switch 14b controlled by an external device such as an ECU or a BMU to close a bypass path 15 in case e.g. an overcurrent flows in the vehicle, and further a device 13 arranged to measure the electric property of the conductive path and to autonomously transmit a control signal responsive to whether a value of the measured signal fulfils a predetermined threshold criteria. In this exemplifying embodiment, as in Figures 1a, 1b and 2a, the device 13 is a coil for measuring an electric property in the form of a current of the bypass path 15. The arrangement 10 further comprises a disconnect switch 14b coupled to the conductive path 12 and arranged to receive the control signal to disconnect the battery module 11 from the conductive path 12.

An alternative to using a coil as a measuring device 13 is to use a current shunt. A current shunt is a low-resistance resistors used to indirectly measure the electric current by measuring a voltage drop created by the electric current across the resistor. A further alternative to using a coil as a measuring device 13 is to use a probe device for measuring an electromagnetic field and determine the current from the measured electromagnetic field. Further alternatives can be envisaged.

In yet another embodiment of the present invention, the arrangement 10 further comprises a delay circuit (not shown) for delaying the control signal transmitted to bypass switch and/or disconnect switch. This delay circuit is preferably embodied by means of a passive component in the form of a capacitor, possibly supplemented with one or more resistors, in order to cause a delay of the control signal. This is advantageous in case disconnection is to be performed after bypassing of the electric equipment, or vice versa. Further, by using passive components, the delay is completely autonomous. If the delay circuit is included in the embodiment of the present invention shown in Figure 2b, it could be implemented by the ECU or BMU which transmits a switch signal to the bypass switch. Thereafter, as the bypass path is closed, the measuring device in the bypass path detects an overcurrent and autonomously transmits the control signal causing the bypass switch to be activated, possibly after having passed through a passive component delay circuit.

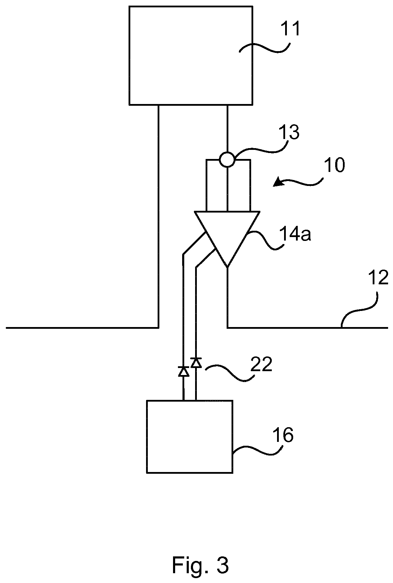

Fig. 3 shows a further embodiment of the present invention, where the switching element 14a of the arrangement 10 of Figure 1a has been complemented with a further control input arranged to receive a switching signal from at least one further device 16 for performing the switching of the electrical equipment. In an embodiment of the present invention, the further device 16 is a temperature sensor. Thus, even if the current in the conductive path 12 does not exceed a predetermined threshold value, it will still be possible to disconnect the battery module 11 if the temperature is rising, thus indicating a possibly catastrophic failure in the vehicle.

In still a further embodiment of the present invention, the further device 16 is embodied in the form of an electronic control unit (ECU) as previously discussed, which typically is implemented by one or more microprocessors executing appropriate software for controlling various systems and components in the vehicle. A vehicle may contain a great number of interconnected ECUs for controlling all properties of the vehicle such as a brake control module (BCM) or a speed control module (SCM). The vehicle could even comprise a particular crash ECU receiving information from a battery monitoring unit (BMU), which detects various physical properties of the battery such as voltage, current, temperature, state of charge (SoC) etc., for management of the battery.

In yet a further embodiment of the present invention illustrated with reference to Figure 3, the arrangement 10 further comprises a pair of diodes 22 for protecting the ECU/temperature sensor 16 against detrimental coil over-currents.

In embodiments of the present invention, the one or more switching elements 14a, 14b are embodied by means of relays, such as single pole, single throw (SPST) switches. These relays may be selectively opened and closed if required.

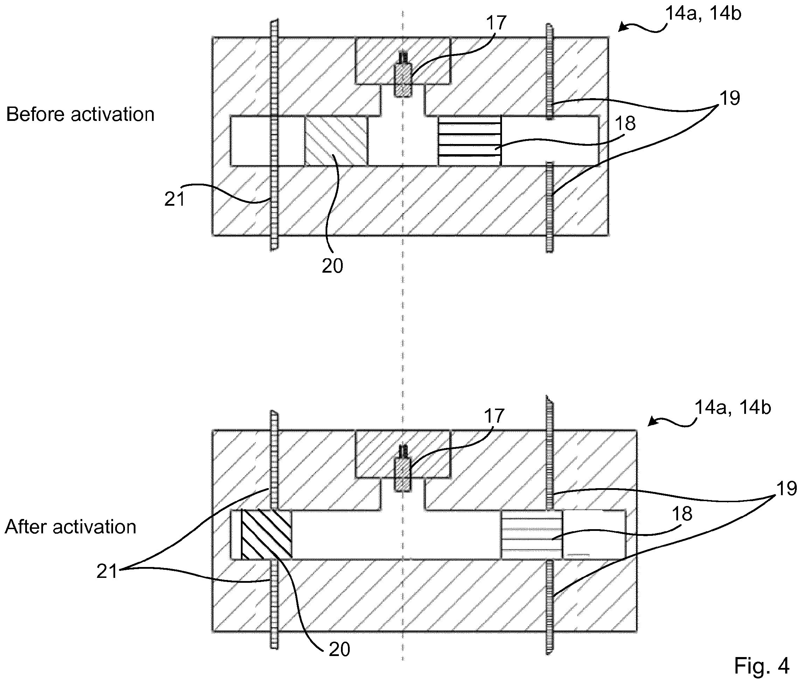

However, with reference to Figure 4, in another embodiment of the present invention, the switching elements 14a, 14b are implemented by means of pyrotechnical switches. In this particular example, the disconnect switch 14a and the bypass switch 14b are arranged in the same housing and using a common pyrotechnical charge 17. However, the respective switch 14a, 14b may be separately implemented using individual charges.

The pyrotechnical switch 14a, 14b of Figure 4 thus comprises a pyrotechnical charge 17, which when ignited activates a piston-like movable bridging element 18 closing a first conductor 19 coupled to the bypass path previously discussed. Hence, the bridging element 18 is conductive and closes the bypass path 15 upon ignition of the charge 17, which ignition is activated by the control signal transmitted by the coil when the coil senses a sufficiently high current. Simultaneously, upon ignition of the pyrotechnical charge 17, a piston-like movable breaking element 20 opens a second conductor 21. The breaking element 20 is hence isolating and disconnects the battery module from the conductive path. An advantage of using a pyro switch as compared to for instance fuses is that switching time is independent of the passing current, which implies instant switching.

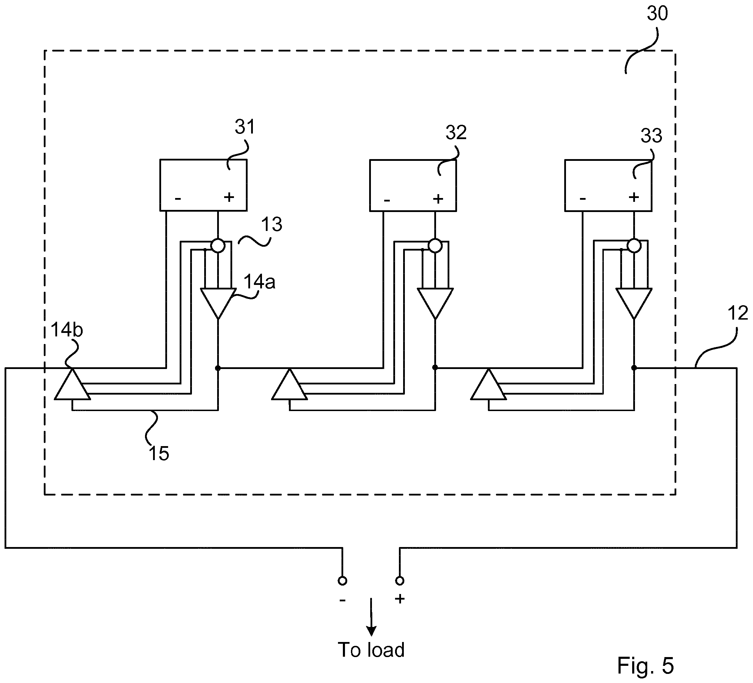

Figure 5 illustrates an embodiment of an arrangement 10 according to the present invention for bypassing and/ or disconnecting one or more battery modules 31, 32, 33 of an automotive battery 30. An automotive battery 30 comprising three serially connected battery modules 31, 32, 33 is located in an electric or hybrid vehicle for delivering power to a load in the form of an electric motor (not shown). Thus, the coil 13 detects a current flowing at an input terminal of the battery module 31. The coil 13 is dimensioned such that if the current exceeds a predetermined threshold value, a control signal of a magnitude sufficient to ignite a charge is transmitted to the respective pyro disconnect switch 14a and pyro bypass switch 14b to activate the switches.

The bypass switch 14b will thus close the bypass path 15 in order to bypass the battery module 31 from the main power line 12, and the disconnect switch 14a will disconnect the battery module 31 from the main power line 12. If not all battery modules 31, 32, 33 are disconnected the driver of the vehicle in which the automotive battery 30 is situated will still be able to move the car in spite of the reduced power delivery capacity of the battery 30.

Further, as previously has been mentioned, an ECU (not shown) may be connected to the respective switch. The ECU may detect that further or even all of the battery modules should be disconnected (for instance as a consequence of a vehicle crash), even though only battery module 31 experiences an over-current at one of its terminals.

To conclude, an advantage of having the passive component 13 control detection of an over-current, as well as bypass and disconnection of the battery module 31 is that an ECU strictly not is required in the arrangement of the present invention, at least not for determining whether the battery modules should be bypassed and/ or disconnected. By using passive components (and not having to included a component such as a microprocessor), the arrangement for disconnecting one or more battery modules becomes inexpensive and less complex. Moreover, the arrangement will be easier to implement inside the automotive battery with passive components.

Even though the invention has been described with reference to specific exemplifying embodiments thereof, many different alterations, modifications and the like will become apparent for those skilled in the art. The described embodiments are therefore not intended to limit the scope of the invention, as defined by the appended claims.

## Claims

1. An arrangement (10) for performing at least one of disconnecting and bypassing an electric equipment (11) responsive to a measurement of an electric property, the arrangement being **characterized in** comprising:
at least one current shunt (13) arranged to measure voltage across a resistor of the current shunt in a conductive path (12) to which the electric equipment (11) is connected and to transmit a control signal responsive to whether a value of the measured voltage fulfils a predetermined threshold criteria or not;
at least one switching element (14a, 14b) arranged to receive the control signal from said at least one device to perform at least of one of disconnecting and bypassing the electric equipment (11) from the conductive path (1), when the predetermined threshold criteria is fulfilled, the at least one current shunt (13) being connected directly to said at least one switching element (14a, 14b) for transmitting the control signal.

2. The arrangement (10) of claim 1, wherein the at least one switching element comprises:
a bypass switch (14b) arranged to bypass the electric equipment (11) upon reception of the control signal from the measuring device (13); and
a disconnect switch (14a) arranged to disconnect the electric equipment (11) upon reception of the control signal from the measuring device (13).

3. The arrangement (10) of any one of claims 1 or 2, wherein the at least one switching element (14a, 14b) is a pyrotechnical bypass switch arranged to bypass the electric equipment (11) upon ignition by the control signal of a pyrotechnical charge (17) by causing a movable bridging element (18) arranged at the pyrotechnical charge (17) to move to a position where the bridging element (18) closes a first conductor (19) to the conductive path (12) for creating a bypass path (15).

4. The arrangement (10) of any one of claims 1-3, wherein the at least one switching element (14a, 14b) is a pyrotechnical disconnect switch arranged to disconnect the electrical equipment (11) upon ignition by the control signal of a pyrotechnical charge (17) by causing a movable breaking element (20) arranged at the pyrotechnical charge (17) to move to a position where the breaking element (20) opens a second conductor (21) between the electric equipment (11) and the conductive path (12).

5. The arrangement (10) of any one of claims 3 and 4, wherein the pyrotechnical bypass switch (14b) and the pyrotechnical disconnect switch (14a) are combined in the same housing and uses the same pyrotechnical charge (17) for ignition.

6. The arrangement (10) of any one of the preceding claims, wherein the electric equipment (11) which is to be at least one of disconnected and bypassed is a battery module comprised in an automotive battery.

7. An automotive battery (30) comprising the arrangement (10) of any one of the preceding claims, the arrangement (10) being arranged at each of a plurality of battery modules (31, 32, 33) comprised in the automotive battery (30) for performing at least one of disconnecting and bypassing of one or more of the battery modules (31, 32, 33).

## Patentansprüche

1. Anordnung (10) zum Vornehmen eines Trennens und/oder Umgehens eines elektrischen Ausstattungsteils (11) als Reaktion auf eine Messung einer elektrischen Eigenschaft, wobei die Anordnung **dadurch gekennzeichnet ist, dass** sie Folgendes umfasst:
mindestens einen Stromshunt (13), der so angeordnet ist, dass er Spannung an einem Widerstand des Stromshunts in einem Strompfad (12) misst, an dem das elektrische Ausstattungsteil (11) angeschlossen ist, und dass er ein Steuersignal als Reaktion darauf überträgt, ob ein Wert des gemessenen Signals ein vorgegebenes Schwellenkriterium erfüllt oder nicht erfüllt;
mindestens ein Schaltelement (14a, 14b), das so angeordnet ist, dass es das Steuersignal von der mindestens einen Einrichtung empfängt, damit es ein Trennen und/oder Umgehen des elektrischen Ausstattungsteils (11) von dem Strompfad (1) vornimmt, wenn das vorgegebene Schwellenkriterium erfüllt ist, wobei der mindestens eine Stromshunt (13) zwecks Übertragung des Steuersignals direkt an das mindestens eine Schaltelement (14a, 14b) angeschlossen ist.

2. Anordnung (10) nach Anspruch 1, wobei das mindestens eine Schaltelement Folgendes umfasst:
einen Umgehungsschalter (14b), der so angeordnet ist, dass er das elektrische Ausstattungsteil (11) beim Empfang des Steuersignals von der Messeinrichtung (13) umgeht; und
einen Trennschalter (14a), der so angeordnet ist, dass er das elektrische Ausstattungsteil (11) beim Empfang des Steuersignals von der Messeinrichtung (13) trennt.

3. Anordnung (10) nach Anspruch 1 oder 2, wobei das mindestens eine Schaltelement (14a, 14b) ein pyrotechnischer Umgehungsschalter ist, der so angeordnet ist, dass er das elektrische Ausstattungsteil (11) beim Zünden durch das Steuersignal einer pyrotechnischen Ladung (17) umgeht, indem er bewirkt, dass sich ein bewegliches Überbrückungselement (18), das an der pyrotechnischen Ladung (17) angeordnet ist, in eine Position bewegt, in der das Überbrückungselement (18) einen ersten Leiter (19) zum Strompfad (12) zwecks Erschaffung einer Umgehungsstrecke (15) schließt.

4. Anordnung (10) nach einem der Ansprüche 1 bis 3, wobei das mindestens eine Schaltelement (14a, 14b) ein pyrotechnischer Trennschalter ist, der so angeordnet ist, dass er das elektrische Ausstattungsteil (11) beim Zünden durch das Steuersignal einer pyrotechnischen Ladung (17) trennt, indem er bewirkt, dass sich ein bewegliches Unterbrechungselement (20), das an der pyrotechnischen Ladung (17) angeordnet ist, in eine Position bewegt, in der das Unterbrechungselement (20) einen zweiten Leiter (21) zwischen dem elektrischen Ausstattungsteil (11) und dem Strompfad (12) öffnet.

5. Anordnung (10) nach Anspruch 3 oder 4, wobei der pyrotechnische Umgehungsschalter (14b) und der pyrotechnische Trennschalter (14a) in demselben Gehäuse kombiniert sind und zum Zünden dieselbe pyrotechnische Ladung (17) nutzen.

6. Anordnung (10) nach einem der vorhergehenden Ansprüche, wobei das elektrische Ausstattungsteil (11), das getrennt und/oder umgangen werden soll, ein Batteriemodul ist, das in einer Autobatterie enthalten ist.

7. Autobatterie (30), die die Anordnung (10) nach einem der vorhergehenden Ansprüche umfasst, wobei die Anordnung (10) an jeder von einer Vielzahl von Batteriemodulen (31, 32, 33) angeordnet ist, die in der Autobatterie (30) enthalten sind, damit sie ein oder mehrere der Batteriemodule (31, 32, 33) trennt und/oder umgeht.

## Revendications

1. Montage (10) permettant de réaliser un isolement et/ou un court-circuitage d'un équipement électrique (11) en réaction à la mesure d'une propriété électrique, le montage étant **caractérisé en ce qu'**il comprend :
au moins un shunt électrique (13) agencé pour mesurer la tension aux bornes d'un résistor du shunt électrique dans un trajet conducteur (12) auquel l'équipement électrique (11) est branché et pour transmettre un signal de commande en réaction au fait que la valeur du signal mesuré remplit un critère de seuil prédéterminé ou non ;
au moins un élément de commutation (14a, 14b) agencé pour recevoir le signal de commande issu dudit au moins un shunt électrique afin de réaliser un isolement et/ou un court-circuitage de l'équipement électrique (11) par rapport au trajet conducteur (12), lorsque le critère de seuil prédéterminé est rempli, l'au moins un shunt électrique (13) étant branché directement audit au moins un élément de commutation (14a, 14b) pour transmettre le signal de commande.

2. Montage (10) selon la revendication 1, dans lequel l'au moins un élément de commutation comprend :
un sectionneur de dérivation (14b) agencé pour court-circuiter l'équipement électrique (11) suite à la réception du signal de commande issu du shunt électrique (13) effectuant la mesure, et
un sectionneur (14a) agencé pour isoler l'équipement électrique (11) suite à la réception du signal de commande issu du shunt électrique (13) effectuant la mesure.

3. Montage (10) selon l'une quelconque des revendications 1 et 2, dans lequel l'au moins un élément de commutation (14a, 14b) est un sectionneur de dérivation pyrotechnique agencé pour court-circuiter l'équipement électrique (11) suite à l'allumage, par le signal de commande, d'une charge pyrotechnique (17), en amenant un élément de pontage (18) mobile, agencé au niveau de la charge pyrotechnique (17), à passer à une position à laquelle l'élément de pontage (18) entraîne la fermeture d'un premier conducteur (19) dans le trajet conducteur (12) afin de créer un trajet de court-circuitage (15).

4. Montage (10) selon l'une quelconque des revendications 1 à 3, dans lequel l'au moins un élément de commutation (14a, 14b) est un sectionneur pyrotechnique agencé pour isoler l'équipement électrique (11) suite à l'allumage, par le signal de commande, d'une charge pyrotechnique (17), en amenant un élément rupteur (20) mobile, agencé au niveau de la charge pyrotechnique (17), à passer à une position à laquelle l'élément rupteur (20) entraîne l'ouverture d'un second conducteur (21) entre l'équipement électrique (11) et le trajet conducteur (12).

5. Montage (10) selon l'une quelconque des revendications 3 et 4, dans lequel le sectionneur de dérivation pyrotechnique (14b) et le sectionneur pyrotechnique (14a) sont combinés dans un même boîtier et utilisent la même charge pyrotechnique (17) pour l'allumage.

6. Montage (10) selon l'une quelconque des revendications précédentes, dans lequel l'équipement électrique (11) destiné à être isolé et/ou court-circuité est un module de batterie inclus dans une batterie pour automobile.

7. Batterie pour automobile (30) comprenant le montage (10) selon l'une quelconque des revendications précédentes, le montage (10) étant agencé au niveau de chacun des modules de batterie d'une pluralité de modules de batterie (31, 32, 33) inclus dans la batterie pour automobile (30) afin de réaliser un isolement et/ou un court-circuitage d'un ou plusieurs des modules de batterie (31, 32, 33).
